# EUROPEAN PATENT SPECIFICATION

(11) **EP 4 312 459 B1**
(45) Date of publication and mention of the grant of the patent: **18.03.2026**
(21) Application number: 22306152.4
(22) Date of filing: 29.07.2022
(51) Int. Cl.: H04W 76/14, H04W 74/0808

(54) **BACK-SCHEDULING FOR SIDELINK COMMUNICATION**
BACK-SCHEDULING FÜR SIDELINK-KOMMUNIKATION
PLANIFICATION ARRIÈRE POUR COMMUNICATION DE LIAISON LATÉRALE

(43) Date of publication of application: 31.01.2024
(73) Proprietor: Eurecom, 06410 Biot (FR)
(72) Inventor: LE, Trung Kien, 06410 BIOT (FR); WAGNER, Sebastian, 06410 BIOT (FR); KNOPP, Raymond, 06410 BIOT (FR)
(74) Representative: Atout PI Laplace

(56) References cited:
- WO-A1-2020/017939
- US-A1- 2019 306 923

## Description

### TECHNICAL FIELD

The invention generally relates to digital communications and in particular to a a transmitting device and to a method for sending a sidelink transmission.

### BACKGROUND

Due to the growing demand for wireless communications in terms of real-time services and applications with higher capacities, mobile communication systems have known major advances.

Mobile communication systems are rapidly progressing from a 4th generation (4G) mobile communication system to the future 5th generation (5G) mobile communication systems which are being standardized to provide rich, reliable and hyper-connected communications. In particular, 5G New Radio (NR) presents significant challenges. Next generation NR networks are in particular expected to increase throughput, coverage, and robustness and reduce latency.

A mobile communication system comprises a mobile communication network, one or more user terminals (also referred to as User Equipments UEs, according to 3GPP standard), and one or more base stations (also referred to as a Node, designated by a derivative of the term 'NodeB' such as gNodeB node or gNB in 5G NR). The base station is associated with a cell defining a geographical cell area. The cell associated with the base station is served by the base station.

While frequency bands were strictly limited to particular technologies (like TV and radio bands) or restricted to cell phone bands, unlicensed spectrum have been rendered available to foster innovation in the communication field. Unlicensed spectrum refers to radio frequencies that are open to any use and by anyone, as long as the devices fulfil technical rules.

In particular, in unlicensed spectrum, a transmitter is required to do Listen Before Talk (LBT) in order to acquire a channel prior to a transmission. There are two channel access mechanisms in LTE and 5G called:
- The load based equipment (LBE), and
- The frame based equipment (FBE) as described in "ETSI EN 301 893, 5 GHz RLAN; Harmonised Standard covering the essential requirements of article 3.2 of Directive 2014/53/EU (v2.1.1)," May 2017.

In LBE, a transmitter attempts to access to a channel whenever it has data to transmit. While in FBE, a transmitter attempts to access to a channel and starts a transmission at the fixed occasions.

In LBE, there are two types of channel access procedures comprising:
- Type 1 channel access procedures used for the User Equipment (UE)/base station (gNB) to acquire a channel and initiate a new channel occupancy time (COT), and
- Type 2 channel access procedures used to allow the UE/gNB to transmit in a COT that is already initiated ("3GPP TS 37.213 v17.2.0, Physical layer procedures for shared spectrum channel access," 2022).

LBT Type 1 channel access procedures are done by the transmitter to obtain a new Channel Occupancy Time or COT. After obtaining a channel, the transmitter transmits data within COT.

LBT Type 1 channel access procedures comprise two steps:
- In the first step called initial Clear Channel Assessment (iCCA), the transmitter senses the channel in a defer duration containing a slot of t1 duration (t1=16 µs for example) and *mₚ* slots of t2 duration (t2=9 µs for example).
- In the second step, after sensing the channel to be idle during a defer duration, the transmitter performs an extended Clear Channel Assessment (eCCA).

The transmitter senses the channel in N additional sensing slots where the duration of each sensing slot is t2. The counter N is a random number uniformly distributed between 0 and CWp where CWp is the value of Contention Window Size. The size of CWp is set to be the smallest allowed value in a priority channel access class and might be increased to a next higher allowed value depending on the percentage of ACK feedback corresponding to the latest transmission burst that ACK feedback is available.

In each sensing slot, if the transmitter senses an idle channel, it decrements the counter by 1. If the transmitter senses a busy channel in a sensing slot, it goes to a defer stage. In this stage, it senses the channel in an additional defer duration. The transmitter exits this stage and decrements the counter by 1 if the channel is sensed to be idle during all sensing slots of the additional defer duration. Otherwise, the transmitter is still in the deferring stage and has to sense the channel in another defer duration. When the counter reaches 0, the transmitter can transmit the packet and occupy channel in a duration of MCOT (maximum COT).

In a COT that is already initiated, the UE/gNB must do another LBT called Type 2 channel procedures before a transmission, if there is a gap between the current transmission and the last transmission. There are three types of Type 2 channel access procedures:
- Type 2A is done when the gap between two transmissions in an initiated COT is bigger than 25 µs. In Type 2A, the UE/gNB senses the channel in an interval of 25 µs and transmits data if the channel is sensed idle.
- Type 2B is done when the gap between two transmissions in an initiated COT is between 16 µs and 25 µs. In Type 2B, the UE/gNB senses the channel in an interval of 16 µs and transmits data if the channel is sensed idle.
- Type 2C is done when the gap between two transmissions in an initiated COT is smaller than 16 µs. In Type 2C, the UE/gNB does not sense the channel before the transmission.

In FBE, a transmitter attempts to access to a channel and starts a transmission at the fixed occasions. The period of these occasions is called fixed frame period (FFP) with a duration of 1, 2, 2.5, 4, 5 or 10 ms consisting of a COT and an idle period. The duration of idle period is at least 5% of the duration of fixed frame period but not smaller than 100 µs. The transmitter does channel sensing within 9 µs in a single observation slot of 25 µs within the idle period. If the channel is busy, the transmitter waits until the observation slot in the next FFP to attempt to access to the channel. If the channel is idle, the transmitter occupies the channel in a COT and stops the transmission before the idle period.

User Equipments (UEs) that send data must advertise the upcoming transmission by broadcasting signaling messages over the Physical Sidelink Control Channel (PSCCH).

The Third Generation Partnership Project (3GPP) in its Release 16 introduces the Vehicle to-Everything (V2X) standard based on the 5G New Radio (NR) air interface. 5G NR V2X introduces advanced functionalities to support connected and automated driving use cases and is in particular focused on sidelink communication.

In NR V2X, the physical channels and slot structure have been standardized to support the direct communication between the devices ("3GPP TS 38.211: Physical channel and modulation V17.2.0," 2022).

In Release 16 and Release 17, sidelink communication is standardized for communication in licensed spectrum.

According to the slot structure with physical channels, there are a number of symbols in a slot, including:
- the first symbol called Automatic gain control (AGC) is a copy of the second symbol. It is used to adjust the power of the received signal to reduce quantization error or the clipping of the signal at the analog to digital converter.
- The physical sidelink control channel (PSCCH) is in the next two or three symbols after AGC symbol. PSCCH contains the first stage sidelink control information (SCI) to indicate, among other parameters, the resources of the physical sidelink shared channel (PSSCH) carrying the transmission of a transport block. In prior art approaches, the receiver device 5 does not know the position of PSCCH in the PSCCH resource so it has to decode blindly the PSCCH candidates in the PSCCH resource to find PSCCH using a blind algorithm (to search among possible SCI formats and resource allocations). In the symbols with PSCCH, PSSCH is multiplexed with PSCCH in frequency division multiplexing (FDM). The rest of the symbols except the last one is used for PSSCH and DMRS (DeModulation Reference Signal) of PSSCH.
- PSSCH carries the second stage of SCI and data payload. The second stage of SCI contains the information used to decode PSSCH, transmit HARQ feedback, etc. The last symbol is a gap to ensure enough time for switching between transmission and reception and vice versa.

A slot generally further comprises the Physical Sidelink Feedback Channel (PSFCH) that carries feedback related to the successful or failed reception of a sidelink transmission (HARQ feedback).

In Release 16 and Release 17, sidelink communication is standardized for communication in licensed spectrum.

In a slot, PSCCH has only one occasion (called 'PSCCH occasion') configured at the beginning of a slot, starting from the second symbol with a duration of two or three symbols, so that a UE only can start a transmission at the beginning of a slot.

In Release 18, the operation of sidelink communication is extended to unlicensed spectrum to support the commercial use cases such as interactive gaming, Internet of Everything, etc. with an increase of data rate. In unlicensed spectrum, the UE has to do a LBT (Listen Before Talk) procedure before a transmission. Due to the uncertainty of LBT, the UE might acquire the channel and initiate a COT in the middle of a slot after the start of the PSCCH occasion. In a first scenario, the UE succeeds in acquiring a channel after the start of the PSCCH occasion in the current slot. Therefore, it cannot transmit PSCCH in the current slot and has to wait until the next slot. Due to the gap between the successful LBT and the next slot, the UE has to do an additional LBT before the transmission. This causes latency in transmission.

The situation might become worse if another device obtains the transmission opportunity before the UE of interest transmits. The UE succeeds in acquiring a channel after the start of the PSCCH occasion in the current slot so that it must wait until the next slot for the transmission. At that time, because the UE does not transmit, another WIFI device senses an idle channel and initiates its own COT to transmit data. As a result, when the UE does an additional LBT before the next slot, it senses a busy channel and cannot transmit so it must continue to wait after the end of the WIFI transmission. An example can be found in US 2019/306923 A1.

Therefore, prior art slot structure and transmission scheme impede an efficient transmission in unlicensed spectrum.

There is accordingly a need for devices and methods enabling and improved sidelink transmissions, in particular in unlicensed spectrum.

### Summary of the invention

In order to address these and other problems, there is provided a transmitter device connected to a receiver device through a wireless communication network, the transmitter device being configured to send a sidelink transmission within one or more time slots to the receiver device, the sidelink transmission comprising performing a Listen-Before-Talk procedure during a current time slot, a time slot comprising a PSCCH occasion with a number of PSCCH candidates corresponding to time-frequency resources. Advantageously, the transmitter device comprises:
- a PSSCH transmitting unit configured to send a PSSCH transmission to the receiver at a starting point within the current time slot and before the next time slot is reached, if the LBT procedure is successful after the start of a PSCCH occasion;
- a PSCCH transmission unit configured to send a PSCCH transmission, after the start of the PSSCH transmission, the PSCCH transmission back indicating the PSSCH, the PSCCH carrying Sidelink Control Information SCI, the PSSCH being associated with the PSCCH.

The transmitter device may comprise a starting point configuration unit adapted to configure the transmitter device with a plurality of starting points in a given time slot, the period of the starting points depending on data requirements and a data rate, the PSSCH transmitting unit being configured to start transmitting the PSSCH at one of the starting points.

The Sidelink Control Information may comprise information related to PSSCH resources, to a modulation and coding scheme, and/or to a DMRS pattern.

The PSCCH transmission may be sent in the next slot n+1 after the current slot n in which the associated PSSCH is transmitted.

Alternatively, the PSCCH transmission may be sent in the current slot.

The PSCCH is associated with a PSCCH resource (also referred to as a main PSCCH resource) and the PSSCH is associated with a PSSCH resource. In one embodiment, the transmitter device may be configured to provide a back-up PSCCH resource for the associated PSSCH resource, at the end of a slot. The PSCCH transmission unit may be configured to use the back-up resource for the PSCCH transmission if the transmitter device cannot transmit the PSCCH in the PSCCH resource in order to indicate an associated PSSCH transmission in the same slot, the PSCCH resource and the back-up PSCCH resource starting in the same subchannel.

In one embodiment, the back-up resource may be further used for PSSCH transmission if the transmitter device already transmits the PSCCH in the PSCCH resource to indicate the PSSCH in the same slot.

The back-up resource may be configured by a base station in the communication network.

If the PSSCH is transmitted on the back-up resource at the end of the current slot, then an AGC symbol may be transmitted in the symbol before the back-up resources. The AGC symbol may be a copy of the symbol immediately preceding it.

In some embodiments, the transmitter device may use an auxiliary PSCCH resource separated from the PSSCH, the auxiliary PSCCH resource being only used for PSCCH transmission and being configured at the end of a slot, the PSCCH resource and the auxiliary PSCCH resource starting in the same subchannel.

The transmitter device may use the auxiliary PSCCH resource to transmit PSCCH to back indicate PSSCH in the same slot if it cannot transmit the PSCCH in the PSCCH resource.

The transmitter device may comprise performing power tuning for PSSCH decoding based on an AGC symbol in the slot where PSCCH is transmitted if there is a correspondence between two slots, and wherein the PSSCH transmission is not preceded by an AGC symbol.

The transmitter device may be configured to transmit PSCCH data in a guard symbol of the slot that it is transmitting or use a cyclic prefix having a selected length for the AGC symbol before PSCCH transmission, the length of the cyclic prefix being selected to fill the gap corresponding to the guard symbol between two slots.

There is also provided a wireless communication system comprising a transmitter device according to any of the following features and a receiver device configured to receive the sidelink transmission, the receiver device being configured to monitor a current slot to detect a sidelink transmission, the receiver device comprising a slot storing unit, the slot storing unit being configured to store the previous slot before the monitored current slot if no sidelink transmission is detected.

The receiver device may be configured to apply a blind decoding algorithm to decode a PSCCH transmission received in the current slot, in response to the detection of a PSCCH transmission, and to find the PSSCH transmission in the previous slot stored in the slot storing unit based on PSSCH resource information comprised in the associated PSCCH transmission carrying the SCI.

In one embodiment, the receiver device may be configured to, if it does not detect PSCCH and PSSCH transmissions in a given slot, store the slot before the current slot it is monitoring.

The receiver device may only monitor the auxiliary PSCCH resource if it does not receive PSCCH in the PSCCH resource.

The receiver device may only monitor the back-up PSCCH resource if it does not find PSCCH carrying SCI in the PSCCH resource.

There is further provided a method of sending a sidelink transmission from a wireless transmitter device to a receiver device, connected through a wireless communication network, through one or more time slots, the sidelink transmission comprising performing a Listen-Before-Talk (LBT) procedure during a current time slot, a time slot comprising a PSCCH occasion with a number of PSCCH candidates corresponding to time-frequency resources, a time slot comprising a PSCCH occasion with a number of PSCCH candidates corresponding to time-frequency resources. The sidelink transmission comprises:
- sending a PSSCH transmission to the receiver device at a starting point within the current time slot and before the next time slot is reached, if the LBT procedure is successful after the starting of a PSCCH occasion; and then
- sending a PSCCH transmission to the receiver device, after the start of the PSSCH transmission, the PSCCH transmission back indicating the PSSCH, the PSCCH carrying Sidelink Control Information SCI.

Advantageously, the embodiments of the instant disclosure enable transmission of PSCCH that indicates PSSCH resources that have already been transmitted, thereby allowing for PSSCH transmission directly after a successful Listen Before Talk (LBT). They further provide signaling mechanisms to support indication of past PSSCH resources and mechanisms to avoid the guard period between two slots thereby avoiding the loss of channel access.

### Brief description of the drawings

The accompanying drawings, which are incorporated in and constitute a part of this specification, illustrate various embodiments of the invention together with the general description of the invention given above, and the detailed description of the embodiments given below.
Figure 1 illustrates an exemplary communication system in which embodiments of the instant disclosure may be implemented
Figure 2 represents a sidelink communication between a transmitter device and a receiver device.
Figure 3 depicts a back-scheduling scheme for sidelink transmission, according to an exemplary embodiment of the invention.
Figure 4 represents an exemplary back-scheduling scheme in a slot with physical sidelink feedback channel (PSFCH) resource.
Figure 5 represents a back-up PSCCH resource used for PSCCH transmission to indicate PSSCH transmission in the same slot, according to an alternative embodiment.
Figure 6 represents a back-up PSCCH resource used for PSSCH transmission, according to another embodiment.

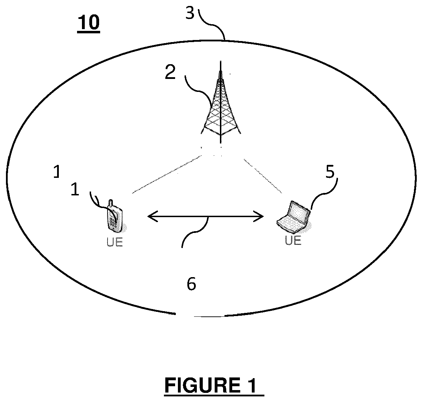

Figure 1A depicts an exemplary implementation of the back-scheduling for sidelink communication, according to one embodiment.

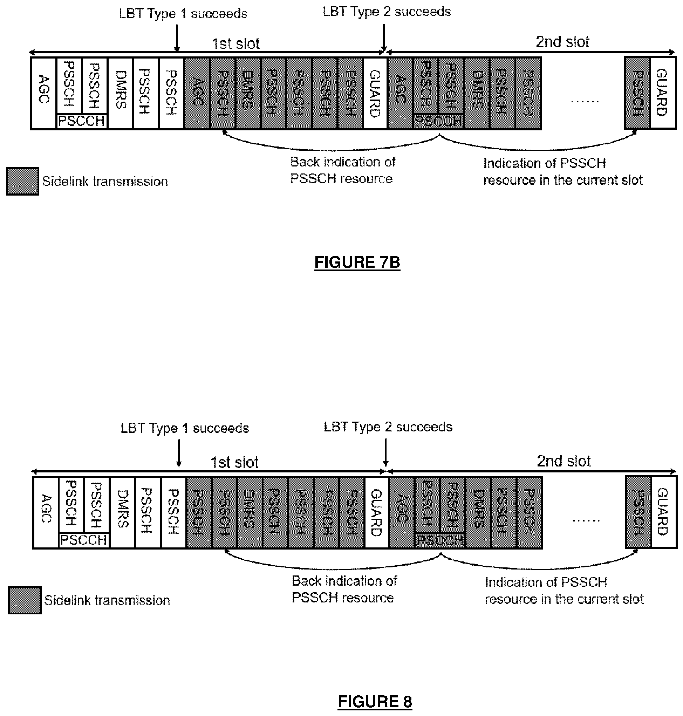

Figure 7B represents an exemplary implementation of one-bit flag to back indicates PSSCH in the previous slot and indicate PSSCH in the current slot.
Figure 8 represents an exemplary back-scheduling scheme without an AGC symbol before PSSCH transmission, according to some embodiments.

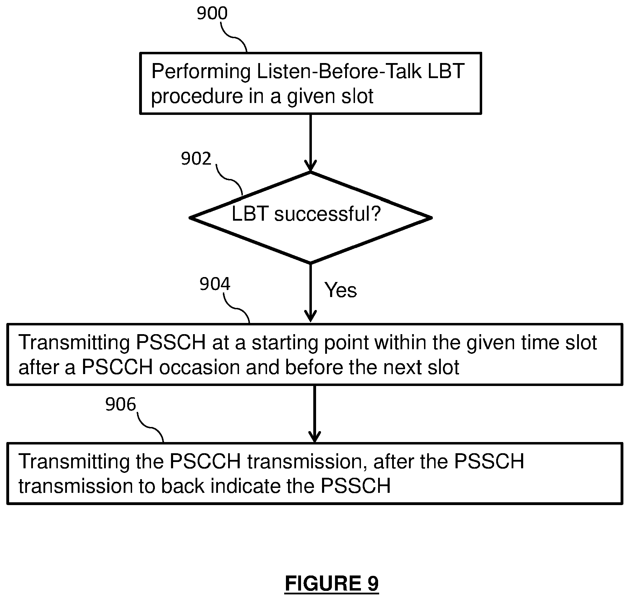

Figure 9 is a flowchart representing a method of sending sidelink transmissions, at the transmitter device 1, according to some embodiments.

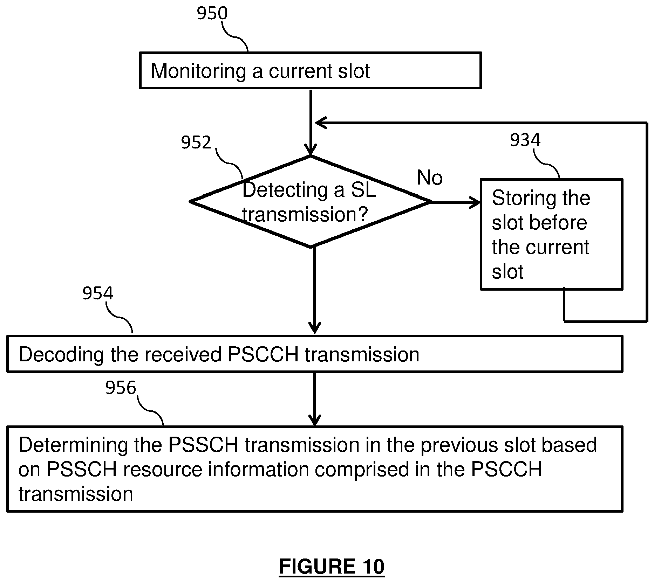

Figure 10 is a flowchart representing a method of receiving sidelink transmissions, at the receiver device, according to some embodiments.

### Detailed description

Embodiments of the present invention provide devices and methods for improved sidelink transmission.

According to the slot structure with physical channels, there are a number of Figure 1 illustrates an exemplary communication system 100 in which embodiments of the instant disclosure may be implemented.

The communication system 10 may be for example a wireless communication system. The following description of embodiments of the invention will be made mainly with reference to a wireless communication system for illustration purpose although the skilled person will readily understand that the invention can also apply to other types of communication systems such as a wired system (for example optical fiber communication system).

The communication system 100 may comprise at least one transmitter device 1 (also referred to hereinafter as a "transmitter") configured to transmit a plurality of information symbols to at least one receiver device 5 (hereinafter referred to as "receiver") through a wireless communication network 3 using a communication channel 6.

The receiver 5 may be configured to receive a signal transmitted by the transmitter 1 and decode the received signal to recover the original data.

The transmitter 1 is configured to transmit digital data comprising information symbols to one or more receivers 5 through the communication channel. A receiver 5 receives and decodes the signal transmitted by the transmitter 1 using a reverse processing that is the reverse to the processing implemented at the transmitter. The digital data transmitted by the transmitter 1 may comprise user data bits and control data bits.

The transmission channel may be any transmission channel adapted to transmit information symbols from the transmitter device 1 to the receiver device 5, depending on the type of the communication system, such as for example a wireless medium or any wireless propagation medium adapted to communication between the wireless devices 1 and 5.

In some applications of the invention to wireless communication systems such as ad-hoc wireless networks used in local area communications, wireless sensor networks and radio communication systems (e.g. LTE, LTE-advanced, 5G and beyond), the transmitter 1 and/or the receiver 5 may be any type of fixed or mobile wireless devices configured to operate in a wireless environment.

The transmitter 1 and/or the receiver 5 may be fixed or mobile and/or may be remotely monitored and/or controlled. The transmitter 1 and/or the receiver 5 may be equipped with power sources that provide power to the different components ensuring the operation of these devices (e.g. dry cell batteries, solar cells, and fuel cells).

The communication network 3 may represent any wireless network enabling loT. Exemplary wireless networks comprise low-power short range networks and LPWANs. Exemplary LPWAN technologies comprise LTE-NB1 and NB-loT.

Further, the communication network 3 may accommodate several pairs of transmitters 1 and receivers 5. In such embodiments, multiple access techniques and/or network coding techniques may be used in combination with error correction codes and modulation. Exemplary multiple access techniques comprise Time Division Multiple Access (TDMA), Frequency Division Multiple Access (FDMA), Code Division Multiple Access (CDMA), and Space Division Multiple Access (SDMA).

The communication channel 6 between the transmitter 1 and the receiver 5 may be a noisy channel. For example, the noise may result from the thermal noise of the system components and/or the intercepted interfering radiation by antennas. Other exemplary sources of noise comprise switching, manual interruptions, electrical sparks and lightning. In some embodiments, the total noise may be modeled by an additive white Gaussian noise (AWGN).

The communication channel 6 may be a multipath channel using single-carrier or multi-carrier modulation formats such as OFDM (Orthogonal Frequency Division Multiplexing) for mitigating frequency-selectivity, interference and delays.

In some embodiments, data transmission in the communication system 100 may correspond to an uplink communication scenario during which the receiver 5 is configured to receive data from the transmitter 1 in the wireless environment.

The transmitter 1 and/or the receiver 5 may be equipped with a plurality of transmit and/or receive antennas. In such embodiments, space-time coding and/or space-time decoding techniques may be used in combination with coded modulations for encoding data both in the time and space dimensions, thereby exploiting space and time diversities of multiple antennas.

The transmitter 1 and the receiver 5 may be each implemented as a wireless user device, such as a User Equipment, each capable of transmitting and receiving user data and control data such as sidelink data. In such case, the wireless user device comprises both a transmission unit to act as a transmitter device and a reception unit to act as a receiver device.

A User Equipment may be, without limitation, a mobile phone, a computer, a laptop, a tablet, a drone, an IoT device etc.

To facilitate the understanding of the present disclosure, the following description of some embodiments of the invention will be made with reference to a transmitter device 1 and a receiver device 5 both implemented as User Equipments, where the transmitter device 1 transmits sidelink transmission to the receiver device 5 and the receiver device 5 is configured to receive the sidelink transmissions from the transmitter device 1, although the skilled person will readily understand that the two devices 1 and 5 can act in the reverse direction when implemented as user equipments.

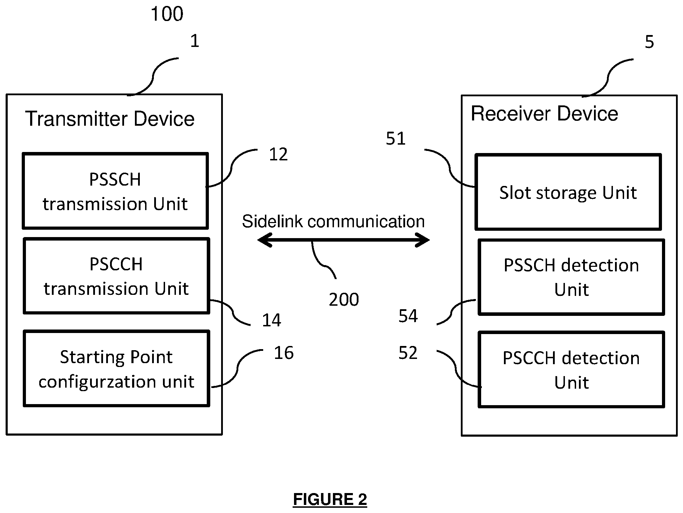

Referring to Figure 2, there is shown a sidelink communication 200 between a transmitter device 1 and a receiver device 5.

The transmitter 1 is configured to transmit sidelink control information 200 used in a physical sidelink control channel to the receiver 5 through the communication network 3.

In some aspects of the present disclosure, the sidelink control information transmitted by the transmitter 1 corresponds to the transmission of Physical Sidelink channels including the Physical Sidelink Control Channel (PSCCH) and the PSSCH (Physical Sidelink Shared Channel).

The Physical Sidelink Shared Channel (PSSCH) carries data payload in the sidelink and additional control information.

The embodiments of the instant disclosure provide an improved sidelink transmission scheme allowing a user equipment to cope with the uncertainty of the Listen Before Talk procedure.

Every PSSCH is associated with a PSCCH. A PSSCH may for example comprise transport blocks such as user data traffic, in a V2X application of the disclosure.

The radio resources in NR are defined in time and frequency domains. Sidelink has the same structure for radio frames, sub- frames, and slots as NR uplink/downlink. Each slot (also referred to as a time slot) may include on top of PSSCH and PSCCH additional data such as PSFCH, AGC (Automatic Gain control) and guard symbols. AGC and guard symbols are sent as specific symbols. AGC symbols may be used for level control in a Sidelink receiver. Guard symbols may be used as guard periods for switching between Sidelink reception and transmission.

The PSCCH carries Sidelink Control Information (SCI) messages, which describe the dynamic transmission properties of the PSSCH.

A UE A may search all configured PSCCH occasion in the configured resource pools for SCI transmissions of interest to it.

The transmission and reception of a UE 1 or 5 in sidelink may take place within a single Sidelink BandWidth Part (BWP). A BandWidth Part (BWP) is defined for NR as a contiguous set of physical resource blocks, selected from a contiguous subset of the common resource blocks for a given numerology on a given carrier.

A Radio resource pool limits the radio resources for PSCCH and PSSCH as they cannot be transmitted in all Resource Blocks (RBs) and slots of NR.

In the frequency domain, a resource pool is divided into sub-channels which are consecutive and non-overlapping Physical Resource Blocks (PRBs).

A sidelink direct communication resource pool is configured on a semi-static basis. The layer 1 physical resources (subframes and resource blocks) associated with the pool are partitioned into a sequence of repeating PSCCH periods (also referred to as scheduling assignment SA period or sidelink control SC period). Within a PSCCH period, there are separate subframe pools and resource block pools for control (PSCCH) and data (PSSCH).

The transmitter device 1 and the receiver device 5 may exchange sidelink communications based on a resource allocation scheme. According to the resource allocation scheme, the resources are mapped in time and frequency domains. The smallest unit in a sidelink (SL) communication is the Resource Element (RE). A RE is composed by a subcarrier, and a modulation symbol (for example OFDM symbol if OFDM modulation is used). N subcarriers (SC) form a Resource Block, and a time slot are associated with to subcarrier spacing and P modulation symbols. The frequency domain comprises K subchannels with M RBs in each one.

A PSSCH transmission is made within a slot. A slot comprises a PSCCH occasion with a number of PSCCH candidates, the PSCCH transmission being sent using a PSCCH occasion.

The transmitter device 1 is configured to implement a Listen Before Talk LBT procedure before sending a sidelink transmission, in a given slot.

In unlicensed spectrum, the transmitter 1 may implement the Listen-Before-Talk LBT procedure to acquire a channel and initiate a Channel Occupancy Time (COT) before the sidelink transmission.

More specifically, the transmitter 1 may perform an LBT procedure, when attempting a sidelink communication, to determine availability of a data channel and transmit via the data channel if available or perform another LBT procedure on another data channel if the data channel is unavailable.

The Listen Before Talk (LBT) may use any suitable channel access mechanisms such as the load based equipment (LBE) according to Type 1 or Type 2 procedures (Type 1 being used to acquire a channel and initiate a new channel occupancy time (COT), and Type 2 being used to allow the UE/gNB to transmit in a COT that is already initiated).

According to the embodiments of the invention, the transmitter 1 comprises a PSSCH transmission unit 12 configured to transmit the PSSCH information at a starting time within the given a slot n, and before the next time slot n+1 is reached, if the LBT is successful after the start of a PSCCH occasion, so that the transmitter 1 is capable of transmitting immediately after the successful LBT. The transmitter 1 further comprises a PSCCH transmission unit 14 configured to then transmit a PSCCH transmission associated with the transmitted PSSCH in a same slot n or in the next slot n+1, after the PSSCH transmission, the PSCCH transmission back indicating the PSSCH, the PSCCH carrying Sidelink Control Information SCI. As used herein, a LBT procedure performed by the transmitter device 1 is referred to as "successful" is the transmitter device succeeds in acquiring a channel.

As used herein, the expression "PSCCH back indicating PSSCH" means that the start of a PSSCH transmission happens before the start of the associated PSCCH transmission to indicate the information about PSSCH such as for example time and frequency resource assignment, data priority, modulation and coding scheme of PSSCH in the stored signal, the number of DMRS ports, second-stage SCI format transmitted in PSSCH.

While in the prior art, the PSCCH and PSSCH may be FDMed (Frequency Division Multiplexed) and transmitted in the symbols, the transmitter device 1 according to the embodiments of the disclosure transmits, if the LBT is successful after the start of a PSCCH occasion at an instant time of the slot PSSCH and then PSCCH to back indicate PSSCH.

Accordingly, the transmitter device 1 does not have to wait until the next slot, so that latency is decreased.

Such scheme prevents that another wireless device in the communication system 100 steals the transmission opportunity and transmits while the UE 1 is waiting for the next slot.

Although the invention has particular advantages for unlicensed spectrum, aspects described herein can be used more generally in the context of any spectrum management scheme including, for example, dedicated licensed spectrum, unlicensed spectrum, (licensed) shared spectrum. The following description of some embodiments of the invention will be made mainly with reference to the unlicensed spectrum for illustration purpose.

Figure 2 depicts a Back-scheduling scheme, according to an exemplary embodiment of the invention.

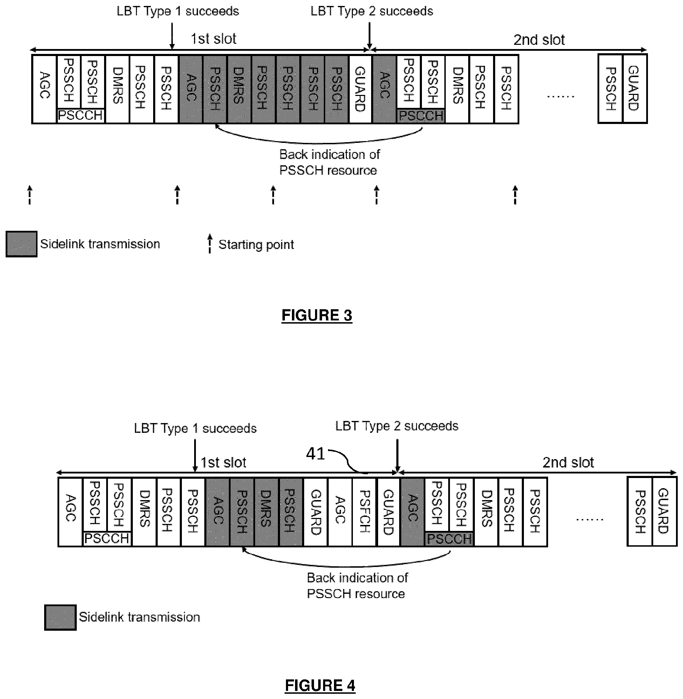

In the example of Figure 3, a type 1 Listen Before Talk (LBT) procedure is implemented and succeeds in the first slot and a type 2 Listen Before Talk (LBT) procedure is implemented and succeeds at the beginning of the second slot.

While in the prior art, due to the uncertainty of LBT, a User Equipment succeeded in accessing the channel after the start of the PSCCH occasion in a slot so that it cannot transmit in that slot but has to wait until the next slot. To avoid the waiting time, the embodiments of the instant disclosure provide an improved back-scheduling scheme for sidelink communications, in which the transmitter 1 may be configured with a plurality of starting points so that it can start a transmission of sidelink data information at an instant time within the slot before the next slot is reached, such as for example an instant time corresponding to the middle of a time slot. In particular, the PSSCH transmitting unit 12 may be configured to start transmitting the PSSCH at one of the starting points. The starting point may be transmitted at the first possible starting point after successful LBT.

According to the embodiments of the present dislosure, the period of the starting points at which a transmission of sidelink control information is to be started may depend on the data requirements (for example, the data requirements may be the latency requirement in Ultra-reliable low-latency communication of 1 ms that requires a starting point period of 1 symbol) and/or on the data rate of the UEs (such as the number of the UEs in the system is bigger than a threshold, a small period (even a period of 1) of the starting points is required to avoid the channel being taken by other UEs in the system 100. The starting points may be configured for every symbol so that the transmitter UE 1 may transmit immediately after a successful Listen-Before-Talk procedure.

In one embodiment, the base station 2 may configure the starting points to a User Equiment 1 through DCI (Downlink Control Information) or RRC. A UE such as transmitter 1 may configure the starting points to another User Equipment through SCI or RRC signaling.

The period between the starting points may range between 1 and 13 symbols in a slot. In a cell with a large number of user devices, the period of starting points may be configured to be small (even 1 symbol for example) to avoid the channel being taken by another device after a successful LBT.

After a successful LBT, the transmitter device 1 may start to transmit at one starting point among the set of starting points provided in the slot. If such starting point is after the start of the PSCCH occasion in a slot, the UE may transmit PSSCH carrying the transmission of a transport block without the associated PSCCH transmitted before, as shown in Figure 3.

After the transmission of the PSSCH, the UE 10 may transmit the associated PSCCH carrying SCI (sidelink control information) in the next PSCCH occasion to back indicate PSSCH transmitted before.

In particular, in the next slot, in the PSCCH occasion, the transmitter device 1 may transmit PSCCH carrying SCI with the information about PSSCH resources to back indicate the location of PSSCH carrying data in the previous slot.

Besides PSSCH resources, SCI in PSCCH may comprise auxiliary information such as for example and without limitation data priority information, DMRS pattern information, modulation and coding scheme of PSSCH, and/or the number of DMRS ports, etc.

At the receiver side, the receiver device 5 is configured to monitor a current slot to detect a sidelink transmission (PSCCH and PSSCH transmissions).

As shown in Figure 2, the receiver device 5 may comprise a slot storage unit 51 configured to store the previous slot n-1 before the current slot n that it is monitoring if PSCCH and PSSCH transmissions are not detected. In other words, after the receiver device 5 monitors a slot and does not detect PSCCH and PSSCH transmissions, it stores that slot for a potential back indication in the next slot. If the back-up PSCCH resource is used in the same slot, the receiver device 5 may store the current slot. The storage unit may store the signals of the slot containing the resources that a receiver UE is supposed to monitor to receive PSCCH and PSSCH. The signals of the slot containing the resources may be the RF (Radio Frequency) samples or the base-band signal. If there is a PSSCH transmission, the resources contain the PSSCH transmission. If there is no transmission, the resources only contain noise. Based on PSCCH transmitted in the next slot to back indicate PSSCH transmitted before, the receiving UE can find PSSCH in the stored signal. In some embodiments, there may be also an AGC symbol transmitted before PSSCH so that the receiver can adjust the gains of the stored signal for improved PSSCH detection. If no PSCCH is found in the next slot, the stored signal is discarded. In particular, in the embodiments using a back-up PSCCH resource, an AGC symbol may be used (symbol before the start of the back-up resources). This AGC symbol may be a copy of the first symbol with the back-up resources.

The receiver device 5 may comprise a PSCCH detection unit 52 configured to apply a blind decoding algorithm to blind decode the PSCCH in a PSCCH occasion. If the receiver device 5 successfully decodes the PSCCH, based on PSSCH resource information, the receiver device 5 may find PSSCH in the slot stored in the storage unit 51 and decode it. In PSCCH resources, there may be several PSCCH candidates with different resource locations and configurations. The receiver device 5 does not know the exact location of a transmitted PSCCH so that the decoder of the receiver device 5 runs to decode each PSCCH candidate. PSCCH may be encoded for example by Polar code. In this case, the decoder at the receiver device 5 may be a Polar decoder configured to decode PSCCH. The receiving device 5 may run an algorithm such as for example a "for" loop algorithm to try all PSCCH candidates in PSCCH resources and all SCI formats. If the receiver device 5 decodes correctly PSCCH in a PSCCH candidate, the receiver device 5 may obtain the information such as for example information about time and frequency resource assignment, data priority, modulation and coding scheme of PSSCH in the stored signal, the number of DMRS ports, and/or second-stage SCI format transmitted in the stored PSSCH. From that information, the receiving device 5 can determine the location of the PSSCH transmission. Subsequently, the receiving device 5 may use DMRS to estimate the channel and then decodes the second stage of SCI to obtain additional information such as for example and without limitation information about HARQ process ID, new data indicator, redundancy version, source ID, destination ID, etc. In another example, if PSSCH is encoded by a LDPC code, the receiver device 5 may use a LDPC decoder to decode PSSCH based on channel estimation from information obtained from SC such as DMRS, modulation and coding scheme, and/or redundancy version.

The receiver device may comprise a PSSCH detection unit 54 configured to find, after successful decoding of the PSCCH by the PSCCH detection unit 52, the PSSCH in the previous slot stored in the slot storage unit 51 based on PSSCH resource information in PSCCH carrying SCI.

Turning back to Figure 3, in this example, the receiver device 5 decodes blindly PSCCH in slot 2 using a blind decoding algorithm. The decoded PSCCH carrying SCI in slot 2 indicates the UE 5 that this SCI back indicates PSSCH in the previous slot. From the information about PSSCH resource in SCI, the UE may find PSSCH in the previous slot and decode it.

Figure 4 depicts an exemplary back-scheduling scheme in a slot with physical sidelink feedback channel (PSFCH) resource denoted by reference 41. The PSFCH may be used to communicate sidelink feedback, such as hybrid automatic repeat request HARD feedback, transmit power control TPC, and/or a scheduling request SR. In Figure 4, the transmitter device 1 succeeds in acquiring a channel after the PSCCH resource so that it transmits PSSCH and stops before PSFCH resource. Due to the guard symbol or the absence of feedback transmission in PSFCH resource, the transmitter device 1 may perform another Listen Before Talk LBT procedure (LBT Type 2) before transmitting PSCCH in the next slot to back indicate PSSCH in the previous slot. The receiver device 5 will then decode this PSCCH to find PSSCH transmitted before in the slot stored in the slot storage unit 51.

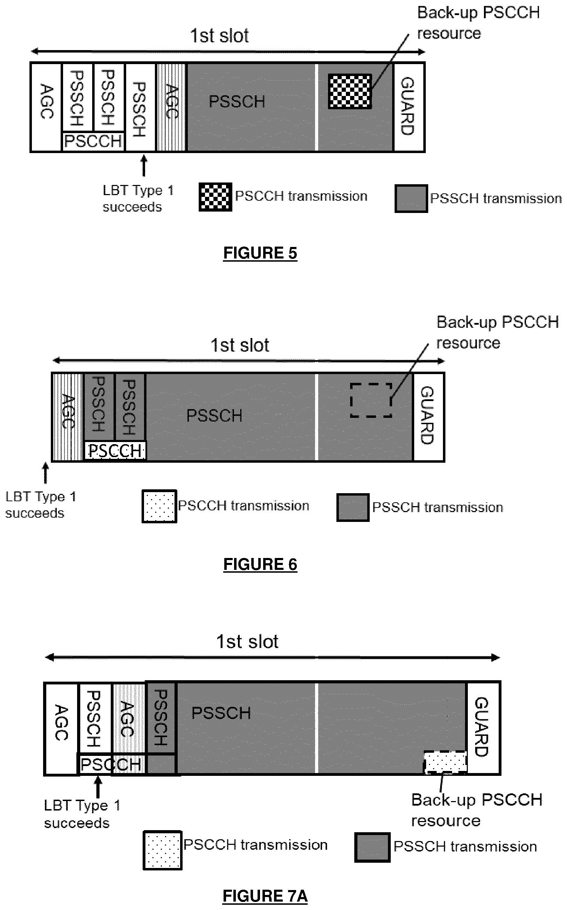

Figure 5 depicts a back-up PSCCH resource used for PSCCH transmission to indicate PSSCH transmission in the same slot, according to an alternative embodiment.

In such alternative embodiment of the back-scheduling scheme, PSCCH may be transmitted in the same slot with PSSCH instead of being transmitted in the next slot. A back-up resource for PSCCH may be then configured in the PSSCH resource at the end of a slot, in the same subchannel as the PSCCH resource, at the beginning of a slot (this location in the slot may be configurable and subject to processing time requirements of the receiver device 5). In this case, the starting subchannel of the PSCCH and the associated PSSCH are assumed to be the same to indicate the start sub-channel of associated PSSCH. If a transmitter device 1 succeeds in acquiring a channel after the the start of PSCCH occasion at the beginning of a slot (main PSCCH resource), it may still transmit PSSCH. Subsequently, in the same slot, PSCCH may be transmitted in the back-up PSCCH resource to back indicate time and frequency resources of PSSCH. In other words, the transmitter device 1 may puncture PSSCH data to transmit PSCCH as shown in Figure 5.

Figure 3 depict a back-up PSCCH resource used for PSSCH transmission, according to another embodiment.

According to such embodiment, if the transmitter device 1 succeeds in acquiring the channel at the beginning of a slot and transmits PSCCH in the PSCCH resource (also called hereinafter "main PSCCH resource"), a back-up PSCCH resource may be used for PSSCH transmission so that PSSCH resource is not punctured by PSCCH as depicted in Figure 3.

Therefore, in some embodiments, the transmitter device 1 may be configured to provide a back-up PSCCH resource in the PSSCH resource at the end of a slot, in the same subchannel as the main PSCCH resource, the provided resource being used for PSCCH transmission if the UE cannot transmit PSCCH in the main PSCCH resource to indicate a PSSCH transmission in the same slot. This resource may be also used for PSSCH if the transmitter device 1 already transmits PSCCH in the main resource to indicate PSSCH in the same slot. In other words, in such embodiment, the receiver device 5 may only search in the backup PSCCH occasion if it does not detect a PSCCH in the main occasion at the beginning. If PSCCH is detected at the beginning, the back-up PSCCH resources are ignored and used for PSSCH.

The serving base station gNB 2 may configure the back-up PSCCH resource to the transmitter device 1 and indicate the receiver device 5 to monitor this resource.

The receiver device 5 may not be required to continuously monitor and do blind decoding in the back-up resource. If the receiver device 5 detects PSCCH in the main PSCCH resource, it knows that PSCCH is already transmitted so that the back-up resource will be used for PSSCH. In such case, the receiver device 5 may not perform blind decoding in the back-up resource to look for PSCCH. This alleviates blind decoding burden at the receiver side (receiver 5). If the receiver device 5 does not detect PSCCH in the main PSCCH resource, it may look for PSCCH in the back-up resource. In case the receiver device 5 finds PSCCH carrying SCI, it derives that a part of PSSCH scheduled by this SCI is punctured for the PSCCH transmission. The receiver device 5 may then exclude the punctured resource in PSSCH decoding.

Therefore, the receiver device 5 may only monitor the back-up PSCCH resource if it does not find PSCCH carrying SCI in the main PSCCH resource.

In one embodiment, to reduce an increase of PSCCH blind decoding, only a small number of PSCCH candidates may be configured in the back-up PSCCH resource.

In an alternative embodiment, an auxiliary PSCCH resource may be configured at the end of a slot, in the same subchannel as the main PSCCH resource, the auxiliary PSCCH resource being separated from the PSSCH resource. The auxiliary PSCCH resource may only be used for PSCCH and not shared with PSSCH.

The transmitter device may use the auxiliary PSCCH resource to transmit PSCCH to back indicate PSSCH in the same slot if it cannot transmit PSCCH in the main PSCCH resource.

Therefore, if the transmitter device 1 starts to transmit PSSCH at an instant time in a slot (for example middle of a slot) and cannot transmit PSCCH in the main PSCCH at the beginning of a slot, it may transmit PSCCH in the auxiliary PSCCH resource to back indicate PSSCH in the same slot. The receiver device 5 may only monitor the auxiliary PSCCH resource if it does not detect PSCCH in the main resource.

Figure 4A depicts an exemplary implementation of the back-scheduling for sidelink communication, according to one embodiment where back-up resources are used.

In the example of Figure 7A, LBT succeeds in the symbols with PSCCH occasion. The transmitter can transmit PSSCH immediately and use the resource originally allocated to PSCCH since PSCCH cannot be transmitted. The PSSCH transmission may possibly include an AGC symbol which is a copy of the symbol immediately succeeding it. PSCCH resources are used to PSSCH.

In particular, in order to decode PSCCH in the back-up resource, the receiver device 5 may need to do AGC. Hence, the symbol immediately preceding the PSCCH resources is used for AGC. The symbol immediately preceding the PSCCH resources may be for example a PSSCH symbol or a copy of the symbol immediately following the AGC (not depicted in Figure 7A).

In some embodiments, the transmitter device 1 may use signaling such as an indicator flag to support the back-scheduling scheme for sidelink communication.

In one embodiment, in the back-scheduling scheme where PSSCH and associated PSCCH are transmitted in two different slots, a specific parameter in the SCI of the PSCCH may be used to indicate the PSSCH resource in the previous slot or in the current slot. In one embodiment, the SCI may for example comprise a PSSCH slot indicator flag which may be a one-bit flag, the flag being used to indicate to the receiver device 5 whether the SCI back indicates PSSCH in the previous slot or indicates PSSCH in the current slot.

Such slot indicator flag of the SCI can accordingly be used to inform the receiver device 5 that SCI back indicates PSSCH in the previous slot or indicates PSSCH in the current slot. A reserved bit in an existing SCI format can be used for that purpose.

Figure 5B depicts an exemplary implementation of one-bit flag to back indicates PSSCH in the previous slot and indicate PSSCH in the current slot.

In the example of Figure 7B, the one-bit indicator flag is one bit of the PSCCH SCI and is used to back indicate PSSCH in the previous slot and indicate PSSCH in the current slot at the same time.

To indicate the starting symbol of PSSCH in a slot, a new field may be added in SCI called Starting symbol index and a new Radio resource control (RRC) parameter *StartingSymbolValue* (SSV) may be used. The resulting SCI may constitute a new SCI Format or alternatively reserved bits may be used in an existing format. The SSV depends on what possible starting values have been configured.

The starting values may be configured through higher layers, depending on whether PSCCH is transmitted in the same slot or in the next slot n+1. If the PSCCH is transmitted in slot n+1, more values are needed than when a back-up PSCCH is used.

Example configurations are given in the following table 'Table 1', in which each configuration index is associated with one or more starting symbols:

**Table 1**

| Configuration Index | Starting symbols |
|---|---|
| 0 | 1,2,3,4,5,6,7,8,9,10,11 |
| 1 | 1,2,3,4,5,6,7 |
| 2 | 2,4,6,8 |

The more possible starting symbols, the more bits are required for signaling the starting symbol.

In the new RRC parameter, a starting symbol table, such as the following exemplary table 2, may be configured with the value representing the starting symbol of PSSCH including the potential AGC symbol. The new field in the SCI may indicate the index in the starting symbol table so that the receiver device 5 can determine the starting symbol of PSSCH. In table 2, SSVi refers to the (i+1)-th starting symbol configured (for example SSV0 refers to the first starting symbol configured).

**Table 2:**

| Index | Starting symbol value (SSV) |
|---|---|
| 0 | SSV 0 |
| 1 | SSV 1 |
| ... | ... |

One SCI may indicate PSSCH in the previous slot, PSSCH in the same slot, or PSSCH in the next slots at the same time. One index in the table may contain multiple values of starting symbols. In one embodiment, the value of the starting symbol is negative in case of PSSCH back scheduling in the previous slot and the value of the starting symbol is positive in case PSCCH indicates PSSCH in the same slot or in the next slots.

Alternatively, a new RRC parameter called *OffsetValue_PSSCH* may be used. In relation with the RRC parameter *OffsetValue_PSSCH,* an offset value table may be configured to associate each table index to an offset value SSV representing an offset from the starting of PSCCH to the starting of PSSCH. The new field in SCI may then indicate the index in the offset value table so that the receiver device 5 may determine the starting symbol of PSSCH using the offset value table. The following table 3 is an exemplary offset value table:

| Index | Offset value (SSV) |
|---|---|
| 1 | Offset1 |
| 2 | Offset2 |
| ... | ... |

One index in the offset value table might contain multiple values of starting symbols to indicate multiple PSSCH. In one embodiment, the offset value is negative if PSCCH indicates PSSCH started before that PSCCH, and the offset value is positive if PSCCH indicates PSSCH started after that PSCCH.

PSSCH may be multiplexed with PSCCH in the frequency domain.

In case PSSCH is not multiplexed with PSCCH in frequency domain, PSCCH is not transmitted in the symbols containing the main and auxiliary/back-up resources, and the number of PSSCH starting points decreases. Fewer entries are required in the Starting symbol value table or in the Offset value table so that fewer bits are required for the new field in SCI.

In the back-scheduling scheme according to the embodiments of the disclosure, when PSCCH and PSSCH are transmitted in two slots, the power of transmissions might change from slot to slot so the default gain at the receiver device 5 might not be appropriate. If the gain is too high, it may cause saturation of the low noise amplifier. If the gain is too low, it may not be sufficient to amplify PSCCH and PSSCH for decoding. In some embodiments, the transmitter device 1 may be adapted to prevent such gain related problems by using two AGC symbols in two slots in the back-scheduling scheme, when PSSCH and PSCCH are transmitted to adjust the gain, as depicted in Figure 8.

Figure 8 depicts an exemplary back-scheduling scheme without an AGC symbol before PSSCH transmission, according to some embodiments.

Such back-scheduling scheme enable power tuning for PSSCH decoding based on using an AGC symbol in the slot where PSCCH is transmitted if there is a correspondence between two slots. In this case, PSSCH transmission is not preceded by an AGC symbol.

If there is a correspondence (for example, a temporal correlation, a spatial correlation or both) between the slot where PSSCH is transmitted and the slot where PSCCH is transmitted, only one AGC symbol at the beginning of the slot where PSCCH is transmitted may be used to adjust the gain. This gain may also be used for PSSCH decoding. Therefore, AGC symbol may not be transmitted before PSSCH transmission as illustrated by **Erreur** ! **Source du renvoi introuvable..**

In some embodiments, the transmitter device may be adapted to provide a back-scheduling scheme for sidelink transmission that avoids the gap between PSSCH and PSCCH transmissions in back-scheduling scheme.

When PSSCH and PSCCH are transmitted in two slots in the back-scheduling scheme, the gap between PSSCH and PSCCH due to the guard symbol at the end of a slot might lead to an additional LBT before PSCCH transmission, as shown in Figure 2. To avoid the gap and an additional LBT procedure, the transmitter device may transmit PSSCH data in the guard symbol of the slot that it is transmitting PSSCH carrying the transmission of the transport block. The transmitter device 1 may then transmit PSCCH in the next slot without doing another LBT procedure. Alternatively, the UE 1 may use a longer cyclic prefix for AGC symbol before PSCCH transmission, the length of the cyclic prefix being selected to fill the gap in the guard symbol between the PSSCH and PSCCH transmissions.

Figure 9 is a flowchart representing a method of sending sidelink transmissions, at the transmitter device 1, according to some embodiments.

In step 900, a Listen-Before-Talk procedure is performed by the transmitter device, in a given time slot, to acquire a channel
In step 904, if the LBT procedure is successful (block 902), the PSSCH is transmitted to the receiver device (5) at a starting point within the given time slot after the start of a PSCCH occasion and before the next time slot is reached,
In step 906, the PSCCH is transmitted in the same slot or the next slot to back indicate the PSSCH, the PSCCH carrying sidelink Control Information.

Figure 10 is a flowchart representing a method of receiving sidelink transmissions, at the receiver device 5, according to some embodiments.

In step 950, a current slot is monitored.

In step 953, if no PSSCH and PSCCH transmission is detected (block 952), the previous slot is stored.

In step 954, is a PSCCH transmission is detected, the PSCCH transmission is decoded.

In step 956, the PSSCH transmission is found in the stored previous slot based on PSSCH resource information comprised in the PSCCH transmission.

Advantageously, the transmission device and method according to the embodiments of the disclosure provide an improved sidelink transmission scheme enabling efficient transmission of Physical Sidelink channels, in particular in unlicensed spectrum. Such scheme enables the user equipments 1 and 5 to cope with the uncertainty of the Listen Before Talk procedure.

The invention allows the UE 1 acting as a transmitter device to start transmit immediately after a successful LBT so that latency decreases, an additional LBT is eliminated and while preventing the channel to be taken by other devices.

The embodiments of the invention may be used in various applications such as Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in loT applications, the communication system 10 may be a wireless loT/M2M network representing low energy power-consumption/long battery life/low-latency/low hardware and operating cost/high connection density constraints such as low-power wide area networks and low-power short-range loT networks. Exemplary technologies used in such applications may comprise 5G, LTE-NB1 (Long Term Evolution-Machine to Machine, Narrow Band) and NB-loT (NarrowBand loT).

The embodiments of the disclosure have particular advantages for V2X applications and in particular 5G NR V2X, where the sidelink transmissions may be used to exchange transport blocks, such as user data traffic, between two vehicles, in the unlicensed spectrum.

The communication system 100 may be used in various consumer, commercial, industrial, and infrastructure applications. Exemplary consumer applications comprise connected vehicles (Internet of Vehicles loV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

The transmitter 1 and/or the receiver 5 may be any physical internet-enabled device/object provided with required hardware and/or software technologies enabling communication over Internet. The transmitter 1 and/or the receiver 5 may be any standard internet connected-devices such as desktop computers, servers, virtual machines laptops, smart-phones, tablets. In some applications, the transmitter 1 and/or the receiver 5 may be any loT/M2M device or connected device operating in an loT/M2M network such as medical devices, temperature and weather monitors, connected cards, thermostats, appliances, security devices, drones, smart clothes, eHealth devices, robots, and smart outlets.

Embodiments of the present invention can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, the invention is solely defined in the appended claims.

In particular, although the invention has particular advantages in embodiments using OFDM modulation, the invention also applies to other type of single-carrier and multi-carrier modulation.

## Claims

1. A transmitter device connected to a receiver device through a wireless communication network, the transmitter device (1) being configured to send a sidelink transmission within one or more time slots to said receiver device (5), the sidelink transmission comprising performing a Listen-Before-Talk procedure during a current time slot, a time slot comprising a PSCCH occasion with a number of PSCCH candidates corresponding to time-frequency resources,
wherein the transmitter device comprises:
- a PSSCH transmitting unit (12) configured to send a PSSCH transmission to the receiver (5) at a starting point within said current time slot and before the next time slot is reached, if the LBT procedure is successful after the start of a PSCCH occasion;
- a PSCCH transmission unit (14) configured to send a PSCCH transmission, after the start of the PSSCH transmission, said PSCCH transmission back indicating the PSSCH, the PSCCH carrying Sidelink Control Information SCI, the PSSCH being associated with the PSCCH.

2. The transmitter device of claim 1, wherein the transmitter device comprises a starting point configuration unit adapted to configure the transmitter device with a plurality of starting points in a given time slot, the period of the starting points depending on data requirements and a data rate, wherein the PSSCH transmitting unit (12) is configured to start transmitting said PSSCH at one of said starting points.

3. The transmitter device of any preceding claim, wherein the PSCCH transmission is sent in the next slot after said current slot in which the associated PSSCH is transmitted.

4. The transmitter device of any preceding claim 2 and 3, wherein the PSCCH transmission is sent in the current slot.

5. The transmitter device of claim 4, wherein the PSCCH is associated with a PSCCH resource and the PSSCH is associated with a PSSCH resource, and wherein the transmitter device (1) is configured to provide a back-up PSCCH resource for the associated PSSCH resource, at the end of a slot, wherein the PSCCH transmission unit (14) is configured to use said back-up resource for the PSCCH transmission if the transmitter device cannot transmit the PSCCH in said PSCCH resource in order to indicate an associated PSSCH transmission in the same slot, the PSCCH resource and the back-up PSCCH resource starting in the same subchannel.

6. The transmitter device of claim 5, wherein the back-up resource is further used for PSSCH transmission if the transmitter device already transmits the PSCCH in the PSCCH resource to indicate the PSSCH in the same slot.

7. The transmitter device of any preceding claim 5 and 6, wherein if PSSCH is transmitted on the back-up resource at the end of the current slot, then an AGC symbol is transmitted in the symbol before the back-up resources.

8. The transmitter device of any preceding claim 1 to 3, wherein the transmitter device uses an auxiliary PSCCH resource separated from the PSSCH, the auxiliary PSCCH resource being only used for PSCCH transmission and being configured at the end of a slot, the PSCCH resource and the auxiliary PSCCH resource starting in the same subchannel.

9. The transmitter device of claim 8, wherein the transmitter device (5) uses the auxiliary PSCCH resource to transmit PSCCH to back indicate PSSCH in the same slot if it cannot transmit the PSCCH in the PSCCH resource.

10. The transmitter device of any preceding claim, wherein it comprises performing power tuning for PSSCH decoding based on an AGC symbol in the slot where PSCCH is transmitted if there is a correspondence between two slots, and wherein the PSSCH transmission is not preceded by an AGC symbol.

11. The transmitter device of any preceding claim, wherein the transmitter device is configured to transmit PSCCH data in a guard symbol of the slot that it is transmitting or use a cyclic prefix having a selected length for the AGC symbol before PSCCH transmission, the length of the cyclic prefix being selected to fill the gap corresponding to the guard symbol between two slots.

12. A wireless communication system comprising a transmitter device (1) according to any preceding claim and a receiver device configured to receive the sidelink transmission, wherein the receiver device (5) is configured to monitor a current slot to detect a sidelink transmission, the receiver device comprising a slot storing unit (51), the slot storing unit (51) being configured to store the previous slot before the monitored current slot if no sidelink transmission is detected.

13. The wireless communication system according to claim 12, wherein the receiver device (5) is configured to apply a blind decoding algorithm to decode a PSCCH transmission received in the current slot, in response to the detection of a PSCCH transmission, and to find the PSSCH transmission in said previous slot stored in the slot storing unit (51) based on PSSCH resource information comprised in the associated PSCCH transmission carrying the SCI.

14. The wireless communication system according to any preceding claim 12 and 13, wherein the receiver device (5) is configured to, if it does not detect PSCCH and PSSCH transmissions in a given slot, store said slot before the current slot it is monitoring.

15. The wireless communication system according to claim 8 and 12, wherein the receiver device (5) only monitors the auxiliary PSCCH resource if it does not receive PSCCH in the PSCCH resource.

16. The wireless communication system according to claim 5 and 12, wherein the receiver device (5) only monitors the back-up PSCCH resource if it does not find PSCCH carrying SCI in the PSCCH resource.

17. A method for sending a sidelink transmission from a wireless transmitter device to a receiver device (5), connected through a wireless communication network, through one or more time slots, the sidelink transmission comprising performing a Listen-Before-Talk (LBT) procedure during a current time slot, a time slot comprising a PSCCH occasion with a number of PSCCH candidates corresponding to time-frequency resources, a time slot comprising a PSCCH occasion with a number of PSCCH candidates corresponding to time-frequency resources,
wherein the sidelink transmission comprises:
- sending a PSSCH transmission to the receiver device (5) at a starting point within said current time slot and before the next time slot is reached, if the LBT procedure is successful after the starting of a PSCCH occasion; and then
- sending a PSCCH transmission to the receiver device (5), after the start of the PSSCH transmission, said PSCCH transmission back indicating the PSSCH, the PSCCH carrying Sidelink Control Information SCI.

## Patentansprüche

1. Sendervorrichtung, die über ein drahtloses Kommunikationsnetzwerk mit einer Empfängervorrichtung verbunden ist, wobei die Sendervorrichtung (1) so konfiguriert ist, dass sie innerhalb eines oder mehrerer Zeitschlitze eine Sidelink-Übertragung an die Empfängervorrichtung (5) sendet, wobei die Sidelink-Übertragung die Durchführung eines Listen-Before-Talk-Verfahrens während eines aktuellen Zeitschlitzes umfasst, wobei ein Zeitschlitz eine PSCCH-Gelegenheit mit einer Anzahl von PSCCH-Kandidaten umfasst, die Zeit-Frequenz-Ressourcen entsprechen,
wobei die Sendervorrichtung Folgendes umfasst:
- eine PSSCH-Übertragungseinheit (12), die so konfiguriert ist, dass sie eine PSSCH-Übertragung an den Empfänger (5) zu einem Startpunkt innerhalb des aktuellen Zeitschlitzes und vor Erreichen des nächsten Zeitschlitzes sendet, wenn das LBT-Verfahren nach dem Beginn einer PSSCH-Gelegenheit erfolgreich ist;
- eine PSCCH-Übertragungseinheit (14), die so konfiguriert ist, dass sie eine PSCCH-Übertragung sendet, nach dem Beginn der PSSCH-Übertragung, wobei die PSCCH-Übertragung die PSSCH zurückgibt, wobei die PSCCH die Sidelink Control Information SCI trägt und wobei die PSSCH der PSCCH zugeordnet ist.

2. Sendervorrichtung nach Anspruch 1, wobei die Sendervorrichtung eine Startpunktkonfigurationseinheit umfasst, die dazu angepasst ist, die Sendervorrichtung mit einer Vielzahl von Startpunkten in einem gegebenen Zeitschlitz zu konfigurieren, wobei die Periode der Startpunkte von den Datenanforderungen und einer Datenrate abhängt, wobei die PSSCH-Übertragungseinheit (12) so konfiguriert ist, dass sie mit der Übertragung des PSSCH an einem der Startpunkte beginnt.

3. Sendervorrichtung nach einem vorstehenden Anspruch, wobei die PSCCH-Übertragung im nächsten Zeitschlitz nach dem aktuellen Zeitschlitz gesendet wird, in dem die zugehörige PSSCH-Übertragung erfolgt.

4. Sendervorrichtung nach einem der vorstehenden Ansprüche 2 und 3, wobei die PSCCH-Übertragung im aktuellen Zeitschlitz gesendet wird.

5. Sendervorrichtung nach Anspruch 4, wobei der PSCCH einer PSCCH-Ressource und der PSSCH einer PSSCH-Ressource zugeordnet ist und die Sendervorrichtung (1) so konfiguriert ist, dass sie am Ende eines Zeitschlitzes eine Backup-PSCCH-Ressource für die zugeordnete PSSCH-Ressource bereitstellt, wobei die PSCCH-Übertragungseinheit (14) so konfiguriert ist, dass sie diese Backup-Ressource für die PSCCH-Übertragung verwendet, wenn die Sendervorrichtung den PSCCH in der PSCCH-Ressource nicht übertragen kann, um eine zugehörige PSSCH-Übertragung im selben Zeitschlitz anzuzeigen, wobei die PSCCH-Ressource und die Backup-PSCCH-Ressource im selben Unterkanal beginnen.

6. Sendervorrichtung nach Anspruch 5, wobei die Backup-Ressource weiter für die PSSCH-Übertragung verwendet wird, wenn die Sendervorrichtung bereits den PSCCH in der PSCCH-Ressource überträgt, um den PSSCH im selben Zeitschlitz anzuzeigen.

7. Sendervorrichtung nach einem der vorstehenden Ansprüche 5 und 6, wobei, wenn PSSCH am Ende des aktuellen Zeitschlitzes auf der Backup-Ressource übertragen wird, ein AGC-Symbol im Symbol vor den Backup-Ressourcen übertragen wird.

8. Sendervorrichtung nach einem der vorstehenden Ansprüche 1 bis 3, wobei die Sendervorrichtung eine vom PSSCH getrennte Hilfs-PSCCH-Ressource verwendet, die nur für die PSCCH-Übertragung verwendet wird und am Ende eines Zeitschlitzes konfiguriert ist, wobei die PSCCH-Ressource und die Hilfs-PSCCH-Ressource im selben Unterkanal beginnen.

9. Sendervorrichtung nach Anspruch 8, wobei die Sendervorrichtung (5) die Hilfsressource PSCCH verwendet, um PSCCH zu senden, um PSSCH im selben Zeitschlitz zurück anzuzeigen, wenn sie den PSCCH nicht in der PSCCH-Ressource senden kann.

10. Sendervorrichtung nach einem vorstehenden Anspruch, wobei sie die Leistungsabstimmung für die PSSCH-Decodierung auf der Grundlage eines AGC-Symbols in dem Zeitschlitz umfasst, in dem PSCCH übertragen wird, wenn eine Korrespondenz zwischen zwei Zeitschlitzen besteht, und wobei der PSSCH-Übertragung kein AGC-Symbol vorangeht.

11. Sendervorrichtung nach einem vorstehenden Anspruch, wobei die Sendervorrichtung so konfiguriert ist, dass sie PSCCH-Daten in einem Schutzsymbol des Zeitschlitzes sendet, den sie sendet, oder dass sie vor der PSCCH-Übertragung ein zyklisches Präfix mit einer ausgewählten Länge für das AGC-Symbol verwendet, wobei die Länge des zyklischen Präfixes so gewählt ist, dass sie die Lücke ausfüllt, die dem Schutzsymbol zwischen zwei Zeitschlitzen entspricht.

12. Drahtloses Kommunikationssystem, umfassend eine Sendervorrichtung (1) nach einem vorstehenden Anspruch und eine Empfängervorrichtung, die zum Empfang der Sidelink-Übertragung konfiguriert ist, wobei die Empfängervorrichtung (5) so konfiguriert ist, dass sie einen aktuellen Zeitschlitz überwacht, um eine Sidelink-Übertragung zu erfassen, wobei die Empfängervorrichtung eine Zeitschlitzspeichereinheit (51) umfasst, die so konfiguriert ist, dass sie den vorherigen Zeitschlitz vor dem überwachten aktuellen Zeitschlitz speichert, wenn keine Sidelink-Übertragung erkannt wird.

13. Drahtloses Kommunikationssystem nach Anspruch 12, wobei die Empfängervorrichtung (5) so konfiguriert ist, dass sie einen Blinddecodierungsalgorithmus anwendet, um eine im aktuellen Zeitschlitz empfangene PSCCH-Übertragung zu decodieren, als Reaktion auf die Erkennung einer PSCCH-Übertragung, und um die im Zeitschlitzspeicher (51) gespeicherte PSSCH-Übertragung im vorherigen Zeitschlitz anhand der in der zugehörigen PSCCH-Übertragung, die die SCI trägt, enthaltenen PSSCH-Ressourceninformationen zu finden.

14. Drahtloses Kommunikationssystem nach einem der vorstehenden Ansprüche 12 und 13, wobei die Empfängervorrichtung (5) so konfiguriert ist, dass sie, wenn sie in einem bestimmten Zeitschlitz keine PSCCH- und PSSCH-Übertragungen erkennt, diesen Zeitschlitz vor dem aktuell überwachten Zeitschlitz speichert.

15. Drahtloses Kommunikationssystem nach Anspruch 8 und 12, wobei die Empfängervorrichtung (5) die Hilfs-PSCCH-Ressource nur dann überwacht, wenn sie in der PSCCH-Ressource kein PSCCH empfängt.

16. Drahtloses Kommunikationssystem nach Anspruch 5 und 12, wobei die Empfängervorrichtung (5) die Backup-PSCCH-Ressource nur dann überwacht, wenn sie in der PSCCH-Ressource keinen PSCCH mit SCI findet.

17. Verfahren zum Senden einer Sidelink-Übertragung von einer drahtlosen Sendervorrichtung an eine über ein drahtloses Kommunikationsnetzwerk verbundene Empfängervorrichtung (5) über einen oder mehrere Zeitschlitze, wobei die Sidelink-Übertragung die Durchführung eines Listen-Before-Talk (LBT)-Verfahrens während eines aktuellen Zeitschlitzes umfasst, wobei ein Zeitschlitz eine PSCCH-Gelegenheit mit einer Anzahl von PSCCH-Kandidaten umfasst, die Zeit-Frequenz-Ressourcen entsprechen,
wobei die Sidelink-Übertragung Folgendes umfasst:
- Senden einer PSSCH-Übertragung an die Empfängervorrichtung (5) zu einem Startpunkt innerhalb des aktuellen Zeitschlitzes und vor Erreichen des nächsten Zeitschlitzes, falls das LBT-Verfahren nach dem Beginn eines PSSCH-Ereignisses erfolgreich war; und dann
- Senden einer PSCCH-Übertragung an die Empfängervorrichtung (5), nach Beginn der PSSCH-Übertragung, wobei die PSCCH-Übertragung die PSSCH zurück anzeigt, wobei die PSCCH die Sidelink Control Information SCI trägt.

## Revendications

1. Dispositif émetteur connecté à un dispositif récepteur via un réseau de communication sans fil, le dispositif émetteur (1) étant configuré pour envoyer une transmission de liaison latérale dans un ou plusieurs intervalles de temps audit dispositif récepteur (5), la transmission de liaison latérale comprenant l'exécution d'une procédure d'écoute avant transmission (LBT) pendant un intervalle de temps courant, un intervalle de temps comprenant une occasion PSCCH avec un nombre de candidats PSCCH correspondant à des ressources temps-fréquence,
dans lequel le dispositif émetteur comprend :
- une unité de transmission PSSCH (12) configurée pour envoyer une transmission PSSCH au récepteur (5) au niveau d'un point de départ dans ledit intervalle de temps courant et avant que l'intervalle de temps suivant ne soit atteint, si la procédure LBT réussit après le début d'une occasion PSCCH ;
- une unité de transmission PSCCH (14) configurée pour envoyer une transmission PSCCH, après le début de la transmission PSSCH, ladite transmission PSCCH renvoyant le PSSCH, le PSCCH portant des informations de contrôle de liaison latérale SCI, le PSSCH étant associé au PSCCH.

2. Dispositif émetteur selon la revendication 1, dans lequel le dispositif émetteur comprend une unité de configuration de point de départ adaptée pour configurer le dispositif émetteur avec une pluralité de points de départ dans un intervalle de temps donné, la période des points de départ dépendant de spécifications de données et d'un débit de données, dans lequel l'unité de transmission PSSCH (12) est configurée pour commencer à transmettre ledit PSSCH au niveau de l'un desdits points de départ.

3. Dispositif émetteur selon l'une quelconque des revendications précédentes, dans lequel la transmission PSCCH est envoyée dans l'intervalle de temps suivant celui dans lequel le PSSCH associé est transmis.

4. Dispositif émetteur selon l'une quelconque des revendications 2 et 3 précédentes, dans lequel la transmission PSCCH est envoyée dans l'intervalle de temps courant.

5. Dispositif émetteur selon la revendication 4, dans lequel le PSCCH est associé à une ressource PSCCH et le PSSCH est associé à une ressource PSSCH, et dans lequel le dispositif émetteur (1) est configuré pour fournir une ressource PSCCH de secours pour la ressource PSSCH associée, à la fin d'un intervalle de temps, dans lequel l'unité de transmission PSCCH (14) est configurée pour utiliser ladite ressource de secours pour la transmission PSCCH si le dispositif émetteur ne peut pas transmettre le PSCCH dans ladite ressource PSCCH afin d'indiquer une transmission PSSCH associée dans le même intervalle de temps, la ressource PSCCH et la ressource PSCCH de secours commençant dans le même sous-canal.

6. Dispositif émetteur selon la revendication 5, dans lequel la ressource de secours est en outre utilisée pour la transmission PSSCH si le dispositif émetteur transmet déjà le PSCCH dans la ressource PSCCH pour indiquer le PSSCH dans le même intervalle.

7. Dispositif émetteur selon l'une quelconque des revendications 5 et 6 précédentes, dans lequel si PSSCH est transmis sur la ressource de secours à la fin de l'intervalle courant, alors un symbole AGC est transmis dans le symbole avant les ressources de secours.

8. Dispositif émetteur selon l'une quelconque des revendications 1 à 3 précédentes, dans lequel le dispositif émetteur utilise une ressource PSCCH auxiliaire séparée du PSSCH, la ressource PSCCH auxiliaire étant uniquement utilisée pour la transmission PSCCH et étant configurée à la fin d'un intervalle, la ressource PSCCH et la ressource PSCCH auxiliaire commençant dans le même sous-canal.

9. Dispositif émetteur selon la revendication 8, dans lequel le dispositif émetteur (5) utilise la ressource PSCCH auxiliaire pour transmettre le PSCCH afin d'indiquer le PSCCH dans le même intervalle s'il ne peut pas transmettre le PSCCH dans la ressource PSCCH.

10. Dispositif émetteur selon l'une quelconque des revendications précédentes, dans lequel il comprend la réalisation d'un réglage de puissance pour le décodage PSSCH basé sur un symbole AGC dans l'intervalle pendant lequel le PSCCH est transmis s'il existe une correspondance entre deux intervalles, et dans lequel la transmission PSSCH n'est pas précédée d'un symbole AGC.

11. Dispositif émetteur selon l'une quelconque des revendications précédentes, dans lequel le dispositif émetteur est configuré pour transmettre des données PSCCH dans un symbole de garde de l'intervalle qu'il transmet ou pour utiliser un préfixe cyclique présentant une longueur sélectionnée pour le symbole AGC avant la transmission PSCCH, la longueur du préfixe cyclique étant sélectionnée pour remplir l'espace correspondant au symbole de garde entre deux intervalles.

12. Système de communication sans fil comprenant un dispositif émetteur (1) selon l'une quelconque des revendications précédentes et un dispositif récepteur configuré pour recevoir la transmission de liaison latérale, dans lequel le dispositif récepteur (5) est configuré pour surveiller un intervalle courant afin de détecter une transmission de liaison latérale, le dispositif récepteur comprenant une unité de stockage d'intervalle (51), l'unité de stockage d'intervalle (51) étant configurée pour stocker l'intervalle précédent avant l'intervalle courant surveillé si aucune transmission de liaison latérale n'est détectée.

13. Système de communication sans fil selon la revendication 12, dans lequel le dispositif récepteur (5) est configuré pour appliquer un algorithme de décodage aveugle afin de décoder une transmission PSCCH reçue dans l'intervalle courant, en réponse à la détection d'une transmission PSCCH, et de trouver la transmission PSSCH dans ledit intervalle précédent stockée dans l'unité de stockage d'intervalle (51) sur la base des informations de ressources PSSCH comprises dans la transmission PSCCH associée portant le SCI.

14. Système de communication sans fil selon l'une quelconque des revendications 12 et 13 précédentes, dans lequel le dispositif récepteur (5) est configuré pour, s'il ne détecte pas de transmissions PSCCH et PSSCH dans un intervalle donné, stocker ledit intervalle avant l'intervalle courant qu'il surveille.

15. Système de communication sans fil selon les revendications 8 et 12, dans lequel le dispositif récepteur (5) surveille seulement la ressource PSCCH auxiliaire s'il ne reçoit pas de PSCCH dans la ressource PSCCH.

16. Système de communication sans fil selon les revendications 5 et 12, dans lequel le dispositif récepteur (5) surveille seulement la ressource PSCCH de secours s'il ne trouve pas de PSCCH portant un SCI dans la ressource PSCCH.

17. Procédé d'envoi d'une transmission de liaison latérale d'un dispositif émetteur sans fil à un dispositif récepteur (5), connecté via un réseau de communication sans fil, à travers un ou plusieurs intervalles de temps, la transmission de liaison latérale comprenant l'exécution d'une procédure d'écoute avant transmission (LBT) pendant un intervalle de temps courant, un intervalle de temps comprenant une occasion PSCCH avec un nombre de candidats PSCCH correspondant à des ressources temps-fréquence, un intervalle de temps comprenant une occasion PSCCH avec un nombre de candidats PSCCH correspondant à des ressources temps-fréquence,
dans lequel la transmission par liaison latérale comprend :
- l'envoi d'une transmission PSSCH au dispositif récepteur (5) à un point de départ situé dans ledit intervalle de temps courant et avant que l'intervalle de temps suivant ne soit atteint, si la procédure LBT réussit après le début d'une occasion PSCCH ; et ensuite
- l'envoi d'une transmission PSCCH au dispositif récepteur (5), après le début de la transmission PSSCH, ladite transmission PSCCH renvoie le PSSCH, le PSCCH portant les informations de contrôle de liaison latérale SCI.
